# FASCICULE DE BREVET EUROPEEN

(11) **EP 4 638 132 B1**
(45) Date de publication et mention de la délivrance du brevet: **29.07.2026**
(21) Numéro de dépôt: 23821698.0
(22) Date de dépôt: 18.12.2023
(51) Int. Cl.: B33Y 80/00, B32B 5/32, B68G 7/00, B68G 11/02, B60N 2/70, B29D 99/00, A47C 7/02, A47C 23/00, A47C 27/06, B22F 3/11, B22F 10/10, B22F 10/20

(54) **STRUCTURE ARCHITECTURÉE EN TREILLIS**
ARCHITEKTURGITTERSTRUKTUR
ARCHITECTURED LATTICE STRUCTURE

(30) Priorité: 21.12.2022 FR 2214039
(43) Date de publication de la demande: 29.10.2025
(73) Titulaire: Commissariat à l'Energie Atomique et aux Energies Alternatives, 75015 Paris (FR)
(72) Inventeur: BOUVIER, Michaël, 38054 Grenoble cedex 09 (FR); GLEYZES, Hervé, 38054 Grenoble cedex 09 (FR)
(74) Mandataire: Ipsilon
(86) Numéro de dépôt international: PCT/EP2023/086277
(87) Numéro de publication internationale: WO 2024/133025

(56) Documents cités:
- EP-A1- 3 954 252
- US-A1- 2021 187 897

## Description

### Domaine technique

La présente invention concerne le domaine des structures architecturées en treillis, notamment pour former des dispositifs comportant une interface souple, par exemple molletonnée. Ces structures architecturées en treillis peuvent être destinées à absorber un choc et/ou à former un appui corporel, tel qu'une assise d'un siège, un coussin, un matelas, un accoudoir, un appui-tête, un repose-poignet, une poignée de préhension ou un rembourrage de casque.

### Etat de la technique antérieure

Les structures avec une architecture en treillis présentent une porosité ouverte importante. Elles sont formées de brins ou poutres, généralement denses, connectés entre eux selon des motifs géométriques élémentaires qui se répètent périodiquement dans l'espace. Elles peuvent présenter des propriétés mécaniques en compression avantageuses, en étant notamment aptes à supporter de grandes déformations sans rupture ou déformation irréversible. Elles sont ainsi adaptées à des applications où l'aptitude à stocker et/ou dissiper de l'énergie sous compression est importante, par exemple pour la conception d'amortisseurs de chocs. Elles sont aussi adaptées à des applications pour lesquelles la sensation de confort d'utilisation est recherchée, par exemple pour la conception de supports de soutien corporel tels des assises de sièges, des coussins, des matelas, des accoudoirs, des appui-têtes, des repose-poignets ou des organes de préhension, par exemple des poignées.

Dans ces applications, il est notamment recherché des structures présentant un module de rigidité élastique faible et/ou aptes à absorber et/ou dissiper une quantité d'énergie de déformation avant rupture, aussi dénommée densification par unité de volume, élevée.

Les propriétés mécaniques en compression d'une structure architecturée en treillis sont fonction du matériau source constitutif et diffèrent en fonction du motif géométrique élémentaire formé par les brins/poutres ainsi que ses paramètres dimensionnels. L'article de M. Nasim et U. Galvanetto : « Mechanical characterisation of additively manufactured PA12 lattice structures under quasi-static compression », Materials Today Communications, Volume 29, 2021, 102902, compare les propriétés mécaniques de matériaux architecturé en treillis en fonction du motif élémentaire des brins/poutres.

Parmi différents motifs élémentaires connus, le motif de type dodécaédrique rhombique présente un faible module de rigidité élastique et une forte densification par unité de volume.

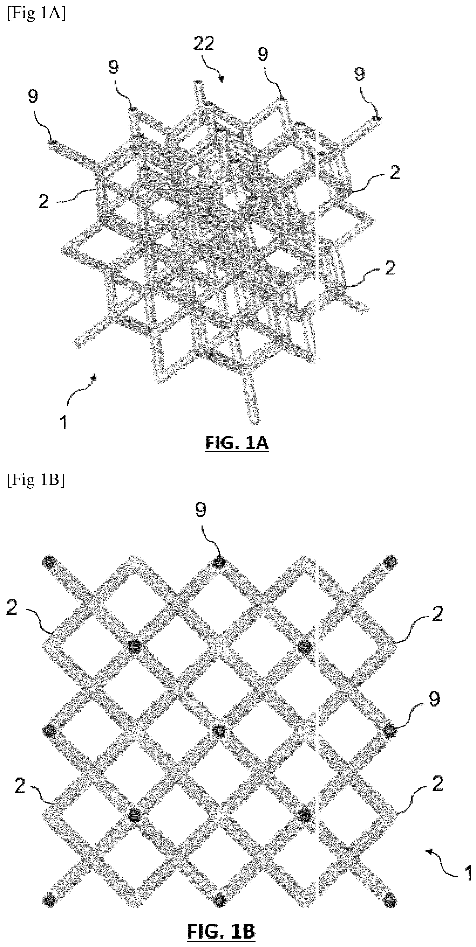

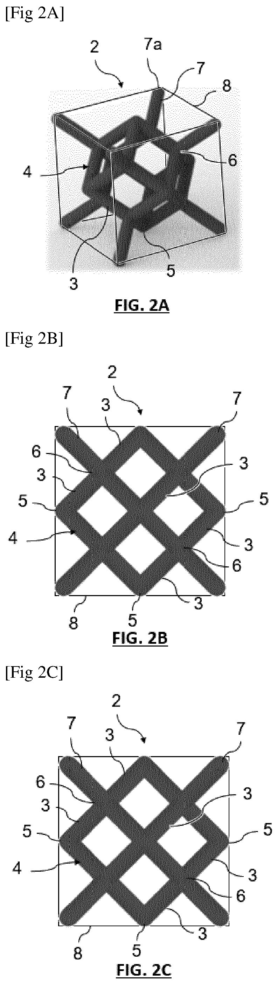

On a illustré aux figures 1A et 1B un treillis 1 formé d'une pluralité de motifs élémentaires de type dodécaédrique rhombique 2 répétés périodiquement et en contact les uns avec les autres et aux figures 2A, 2B et 2C un motif élémentaire de type dodécaédrique rhombique 2. Le motif élémentaire 2 comprend vingt-quatre brins 3 liés entre eux de sorte à former les arêtes d'un dodécaèdre rhombique 4. Le dodécaèdre rhombique 4 comprend six sommets à angles aigus 5 et huit sommets à angles obtus 6. Un sommet à angle aigu 5 est un sommet où quatre faces du dodécaèdre rhombique 4 se rencontrent sur leurs angles aigus. Un sommet à angle obtus 6 est un sommet où trois faces du dodécaèdre rhombique 4 se rencontrent sur leurs angles obtus. Le motif élémentaire 2 est inscrit dans une cellule élémentaire 8, qui correspond au parallélépipède rectangle circonscrit à chacun des sommets à angles aigus 5. Le motif élémentaire 2 comprend également huit brins de liaison 7, chacun reliant un des sommets à angles obtus 6 au sommet le plus proche de la cellule élémentaire 8. Les brins de liaison 7 s'étendent le long des diagonales de la cellule élémentaire 8.

Le motif élémentaire de type dodécaédrique rhombique 2 est similaire au motif dénommé « fluorite » dans le logiciel « nTopology 3.26.3 » développé et commercialisé par la société nTopology, INC. En effet, il est similaire à une structure cristalline de la fluorite pour laquelle chacun des sites atomiques auraient été reliés entre eux par des brins.

Comme cela est illustré aux figures 1A et 1B, les motifs élémentaires de type dodécaédrique rhombique 2 adjacents sont fixés entre eux par contact entre leurs brins de liaison 7 respectifs et par contact entre leurs sommets à angle aigu respectifs.

Bien qu'une structure architecturée en treillis 1 selon un motif élémentaire 2 périodique de type dodécaédrique rhombique présente de bonnes caractéristiques mécaniques, notamment pour la substitution notamment de certaines mousses de polyuréthane, elle présente toutefois une faible surface de contact 9. La surface de contact 9 est l'ensemble des points de la structure 1 de la surface enveloppant une face extérieure 22 de ladite structure 1. Pour la structure architecturée en treillis 1 des figures 1A et 1B, la surface de contact 9 est définie par les extrémités 7a des brins de liaison 7 et des sommets à angles aigus 5 sur la face extérieure 22 de la structure 1. Ainsi, lors de la mise en contact d'un solide, par exemple une partie d'un corps humain, contre la structure 1, l'effort de contact est réparti sur une aire de contact faiblement étendue. Il en résulte des contraintes localement élevées au contact de la surface de contact 9. Ainsi, lors d'un appui corporel, une sensation d'inconfort est ressentie par l'utilisateur, les brins libres et les arêtes agissant alors à la manière d'un ensemble de pointes.

US 2021/187897 A1 décrit une structure en micro-réseau comprenant une pluralité de filaments interconnectés s'étendant dans au moins trois directions différentes à partir de plusieurs nœuds.

EP 3 954 252 A1 concerne un élément de coussin de siège passager et un corps de remplissage.

Il existe donc un besoin pour une structure architecturée en treillis surmontant ces inconvénients. Il existe en outre un besoin pour une structure architecturée en treillis ayant un faible module de rigidité élastique et permettant une forte densification par unité de volume, la structure présentant une grande surface de contact lors d'un appui corporel et qui, en particulier, soit agréable au toucher.

### Exposé de l'invention

L'invention concerne une structure architecturée en treillis comprenant :
- un treillis de corps comportant une pluralité de motifs élémentaires de corps répétés périodiquement et en contact les uns avec les autres, chaque motif élémentaire de corps comportant des brins de corps reliés entre eux pour former les arêtes d'un polyèdre et des brins de liaison reliant le polyèdre aux sommets de la cellule élémentaire de corps, qui est le plus petit parallélépipède rectangle circonscrit au motif élémentaire de corps,
- un treillis superficiel définissant une face de la structure et recouvrant au moins partiellement le treillis de corps, le treillis superficiel comportant une pluralité de motifs élémentaires superficiels répétés périodiquement,

chaque motif élémentaire superficiel comportant un bloc d'appui s'étendant dans un plan médian, parallèle à la face de la structure définie par le treillis superficiel, et des pieds déformables chacun comportant une extrémité fixée au bloc d'appui et une autre extrémité fixée à un des brins de liaison et distante du plan médian,
le treillis superficiel étant configuré pour que sous l'effet d'un effort de compression normal au plan médian, les pieds se déforment pour déplacer le bloc d'appui en translation selon un axe parallèle à l'effort de compression.

Une « cellule élémentaire » est le plus petit parallélépipède rectangle circonscrit à un motif élémentaire. La cellule élémentaire est une construction géométrique fictive, c'est-à-dire qu'elle n'est pas constituée de matière contrairement aux brins ou aux poutres.

Avantageusement, le treillis superficiel augmente la surface de contact de la structure architecturée en treillis sans influencer de manière conséquente les propriétés mécaniques en compression de cette dernière qui sont majoritairement déterminées par le treillis de corps. La surface de contact est formée par le bloc d'appui et peut ainsi être exempte de pointe. Il en résulte que, la contrainte au contact est moindre lors d'un appui corporel, et la pièce est donc plus confortable pour l'utilisateur.

En outre, lors d'un effort en compression appliqué sur le treillis superficiel, celui-ci transmet de manière homogène et uniformément réparti cet effort au treillis de corps. Il en découle une bonne répartition des contraintes dans l'ensemble de la structure architecturée en treillis et donc un meilleur confort pour l'utilisateur.

De préférence, les motifs élémentaires superficiels sont en contact les uns avec les autres.

De préférence, les pieds sont déformables au moins élastiquement.

De préférence, les pieds de chaque motif élémentaire superficiel sont disjoints les uns des autres. Avantageusement, le treillis superficiel est alors plus souple, c'est-à-dire qu'il présente un plus faible module de rigidité élastique, et, lors d'un effort en compression appliqué sur le treillis superficiel, le treillis de corps est peu contraint par le treillis superficiel. De préférence, chaque pied est formé d'une unique branche, c'est-à-dire est exempt de ramification. Un pied disjoint d'un autre pied ne comporte pas de connexion avec ledit autre pied sur l'ensemble de sa portion entre les deux extrémités fixées au bloc d'appui et au brin de liaison.

De préférence, les pieds comprennent une portion rectiligne. La section de la portion rectiligne peut être ellipsoïdale, notamment circulaire, ou quadrilatérale, notamment rectangulaire. La section de la portion rectiligne peut être continue, notamment la portion rectiligne peut être cylindrique, ou peut évoluer en taille et en forme le long de la portion rectiligne.

De préférence, chaque pied est coudé à son extrémité fixée au bloc d'appui. De préférence, chaque pied comporte deux portions rectilignes liées entre elles par un coude. De préférence, la distance, mesurée parallèlement au plan médian, entre l'extrémité fixée au bloc d'appui et le coude est supérieure ou égale à 0,5 mm.

Par leur forme coudée, les pieds évitent les collisions indésirables avec le treillis de corps et le bloc d'appui durant leur déformation sous l'effet de l'effort de compression normal au plan médian. Ainsi, lors d'un effort en compression appliqué sur les motifs élémentaires superficiels, les pieds transmettent de manière homogène l'effort aux motifs élémentaires de corps.

De préférence, chaque motif élémentaire superficiel comporte quatre pieds.

De préférence, chaque pied s'étend le long d'un axe longitudinal formant un angle compris entre 10 et 70° avec le plan médian.

De préférence, la distance, mesurée orthogonalement au plan médian, entre l'extrémité fixée au bloc d'appui et l'extrémité fixée à un des brins de liaison est comprise entre 3 et 50 mm.

De préférence, la distance, mesurée parallèlement au plan médian, entre l'extrémité fixée au bloc d'appui et l'extrémité fixée à un des brins de liaison est comprise entre 10 % et 90 % de la taille du plus grand côté, parallèle au plan médian, de la cellule élémentaire superficielle, qui est le plus petit parallélépipède rectangle circonscrit au motif élémentaire superficiel. De préférence, la distance, mesurée parallèlement au plan médian, entre l'extrémité fixée au bloc d'appui et l'extrémité fixée à un des brins de liaison est comprise entre 0,5 et 45 mm.

De préférence, les pieds, dont l'extrémité fixée au bloc d'appui est proximale du bord du treillis superficiel, présentent une longueur inférieure aux autres pieds. Avantageusement, cela diminue, voire supprime, les singularités de comportement en déformation par compression en périphérie de la face de la structure définie par le treillis superficiel. Notamment, les brins de corps et brins de liaison en périphérie du treillis de corps se déforment plus facilement que les autres brins de corps et brins de liaison. Le raccourcissement des pieds, dont l'extrémité fixée au bloc d'appui est proximale du bord du treillis superficiel, les rigidifie comparément aux autres pieds. Ainsi, la structure architecturée en treillis présente un module de rigidité élastique uniforme sur l'ensemble de la face définie par le treillis superficiel.

De préférence, chaque motif élémentaire superficiel est inscrit dans une cellule élémentaire superficielle de forme parallélépipèdique rectangle et présentant une face confondue qui partage les mêmes sommets avec une face d'une des cellules élémentaires de corps.

De préférence, la face confondue de la cellule élémentaire superficielle présente des côtés compris entre 5 mm et 50 mm.

De préférence, la face confondue de la cellule élémentaire superficielle est carrée.

De préférence, l'extrémité fixée au bloc d'appui de chacun des pieds d'un motif élémentaire superficiel est distante de chacune des faces latérales de la cellule élémentaire superficielle. Avantageusement, cela limite, voire supprime, le risque de collision entre des pieds de deux motifs élémentaires superficiels adjacents lorsqu'un effort en compression est appliqué auxdits motifs élémentaires superficiels. De préférence, la distance entre l'extrémité fixée au bloc d'appui et la face latérale de la cellule élémentaire superficielle la plus proche est comprise entre 1 mm et 40 % de la distance entre ladite face latérale la plus proche et la face latérale de la cellule élémentaire superficielle opposée à ladite face latérale la plus proche, notamment entre 1 et 20 mm.

Les faces latérales de la cellule élémentaire superficielle sont les faces perpendiculaires à la face confondue de la cellule élémentaire superficielle.

De préférence, vue orthogonalement au plan médian, l'extrémité fixée au bloc d'appui de chacun des pieds est distante des diagonales de la cellule élémentaire superficielle.

De préférence, le bloc d'appui comporte une armature comportant une pluralité de poutres d'armature reliées entre elles pour former les côtés d'un polygone parallèle au plan médian. Avantageusement, l'armature transmet uniformément l'effort en compression à chacun des pieds. Cette transmission uniforme assure le maintien du bloc d'appui parallèle au plan médian lors de la déformation des pieds.

De préférence, l'extrémité de chaque pied fixée au bloc d'appui est fixée à l'armature. Cela simplifie la fixation de chaque pied au bloc d'appui de sorte à éviter toute collision entre le pied et le bloc d'appui lors de la déformation du pied.

Le bloc d'appui peut consister en l'armature.

De préférence, chacune des poutres d'armature est distante de chacune des faces latérales de la cellule élémentaire superficielle. Avantageusement, cela limite, voire supprime, le risque de collision entre les armatures de deux motifs élémentaires superficiels adjacents lorsqu'un effort en compression est appliqué auxdits motifs élémentaires superficiels.

De préférence, l'armature a une épaisseur, mesurée orthogonalement au plan médian, comprise entre 0,6 mm et 5 mm, de préférence entre 0,8 et 3 mm.

De préférence, les poutres d'armature sont en un matériau polymère ou en un métal ou en composite, par exemple en un thermoplastique, de préférence en un thermoplastique élastomère, ou en un polymère chargé de micro-billes de verre.

De préférence, l'armature comporte au moins quatre, de préférence au moins six, poutres d'armatures, de préférence le polygone étant un hexagone, de préférence convexe et/ou irrégulier.

De préférence, l'armature est invariante par au moins une rotation autour d'un axe d'armature normal au plan médian, de préférence par une rotation d'angle π/2. De préférence, l'axe d'armature passe par le centre de la cellule élémentaire de corps.

De préférence, l'armature est conformée pour être distante des brins de corps et des brins de liaison lorsque les pieds sont déformés par l'effort de compression et que l'extrémité fixée au bloc d'appui est comprise dans la cellule élémentaire de corps. Avantageusement, l'absence de contact entre l'armature et les brins de corps et les brins de liaison, lorsque les pieds sont déformés en compression, réduit l'influence du treillis superficiel sur les propriétés mécaniques de la structure architecturée en treillis, notamment sur sa densification par unité de volume. En particulier, le comportement mécanique du treillis superficiel, sous l'effet d'un effort de compression normal au plan médian, est majoritairement déterminé par la déformation des pieds.

De préférence, l'armature est conformée pour être superposée aux points de liaison entre les brins de liaison et les brins de corps lorsque les pieds sont déformés par l'effort de compression.

De préférence, le bloc d'appui couvre au moins 50 % de la face du motif élémentaire superficiel vue orthogonalement au plan médian.

De préférence, le bloc d'appui comporte une peau s'étendant parallèlement au plan médian et couvrant au moins 50 % de la face du motif élémentaire superficiel vue orthogonalement au plan médian. Avantageusement, la peau augmente la surface de contact de la structure architecturée en treillis. La peau empêche également le contact entre l'utilisateur en appui avec la structure architecturée en treillis et les pointes des polyèdres des motifs élémentaires de corps. La peau peut améliorer en outre l'aspect esthétique de la structure architecturée en treillis. Notamment, la peau peut comprendre une marque visuelle, par exemple une impression, une empreinte et/ou une texture. Les peaux de plusieurs blocs d'appui, notamment adjacents, peuvent délimiter un motif visuel, par exemple un logo. Par ailleurs, la peau peut recouvrir les pieds du treillis superficiel. Elle protège ainsi les pieds du treillis superficiel en empêchant l'arrachement desdits pieds ou en empêchant une sollicitation mécanique indésirée sur lesdits pieds.

Selon un mode de réalisation, le bloc d'appui peut consister en la peau. Les pieds sont alors fixés directement sur la peau. L'épaisseur de la peau peut être adaptée en conséquence. Notamment, la peau peut présenter une épaisseur plus importante au niveau des points de fixation des pieds sur la peau.

De préférence, la peau présente une épaisseur comprise entre 0,6 et 2 mm, de préférence entre 0,8 et 1,5 mm.

De préférence, la distance, mesurée orthogonalement au plan médian, entre la peau et le coude est comprise entre 0,4 et 1 mm.

De préférence, la peau est en un matériau polymère ou en un métal ou en composite, par exemple en un thermoplastique, de préférence en un thermoplastique élastomère, ou en un polymère chargé de micro-billes de verre.

De préférence, la peau est portée par l'armature, de préférence fixée à l'armature.

La peau du motif élémentaire superficiel peut être disjointe des peaux des autres motifs élémentaires superficiels. Le treillis superficiel transmet alors de manière localisée l'effort de compression au treillis de corps. Les motifs élémentaires superficiels subissant l'effort de compression le transmettent aux motifs élémentaires de corps adjacents. L'influence des motifs élémentaires superficiels ne subissant pas l'effort de compression sur le comportement mécanique de la structure architecturée en treillis est négligeable.

En variante, la peau du motif élémentaire superficiel comprend des points d'attache connectant de manière solidaire ladite peau avec les peaux des motifs élémentaires superficiels adjacents. La transmission de l'effort de compression du treillis superficiel au treillis de corps est alors mieux répartie au niveau de la couche superficielle et donc plus homogène sur l'ensemble de la structure. La peau est en outre plus robuste. Aussi, la solidarité entre les peaux des différents motifs élémentaires superficiels limite le risque d'arrachement individuel d'un motif élémentaire superficiel. Enfin, les connexions entre les peaux des motifs élémentaires superficiels augmentent la surface de contact de la structure architecturée en treillis.

De préférence, la peau est conformée pour être distante des brins de liaison lorsque les pieds sont déformés par l'effort de compression et que l'extrémité fixée au bloc d'appui est comprise dans la cellule élémentaire de corps. Avantageusement, l'absence de contact entre la peau et les brins de liaison, lorsque les pieds sont déformés en compression, réduit l'influence du treillis superficiel sur les propriétés mécaniques de la structure architecturée en treillis, notamment sur sa densification par unité de volume.

De préférence, la peau comprend au moins une rainure s'étendant en vis-à-vis d'un des brins de liaison.

De préférence, la peau présente une ouverture alignée orthogonalement au plan médian à un sommet du polyèdre. De préférence, le sommet est compris dans la face de la cellule élémentaire de corps confondue avec la face de la cellule élémentaire superficielle. Lors d'une translation du bloc d'appui sous l'effet de l'effort de compression, le sommet du polyèdre est engagé, de préférence sans faire saillie au-delà de la face définie par le treillis superficiel, dans l'ouverture puis la peau transmet l'effort de compression aux brins de corps. Il est ainsi possible de configurer l'amplitude de la course en translation du bloc d'appui avant la transmission de l'effort de compression au niveau du sommet du polyèdre. En outre, grâce à l'ouverture, la peau n'appuie pas sur une pointe lors de la transmission de l'effort de compression ce qui limite les risques de déchirure ou fortes déformations de la peau. Par ailleurs, une fois engagé dans l'ouverture et au contact de la peau, le sommet du polyèdre bloque mécaniquement le bloc d'appui en rotation autour d'un axe normal au plan médian et en translation parallèle au plan médian.

De préférence, le bloc d'appui comprend un cadre d'appui fixé à la peau et configuré pour prendre appui sur les brins de corps lorsque les pieds sont déformés par l'effort de compression. Le cadre d'appui permet une reprise de l'effort de compression par le treillis de corps à partir d'un seuil prédéterminé de déformation des pieds. Il est possible de configurer l'amplitude de la course en translation du bloc d'appui avant la transmission de l'effort de compression du cadre d'appui au treillis de corps.

De préférence, le cadre d'appui est configuré pour être engagé autour d'un des sommets du polyèdre lorsque les pieds sont déformés par l'effort de compression. Une fois engagé dans le cadre d'appui, le sommet du polyèdre bloque mécaniquement le bloc d'appui en rotation autour d'un axe normal au plan médian et en translation parallèle au plan médian. De préférence, le sommet du polyèdre est compris dans la face de la cellule élémentaire de corps confondue avec la face de la cellule élémentaire superficielle.

De préférence, la distance entre le cadre d'appui et le treillis de corps, mesurée orthogonalement au plan médian, étant comprise entre 2 mm et 20 mm.

De préférence, le cadre d'appui a une épaisseur, mesurée orthogonalement au plan médian, comprise entre 0,6 mm et 4 mm.

De préférence, le cadre d'appui est en un matériau polymère ou en un métal ou en composite, par exemple en un thermoplastique, de préférence en un thermoplastique élastomère, ou en un polymère chargé de micro-billes de verre.

De préférence, la structure architecturée en treillis est monolithique, de préférence faite d'un même matériau.

De préférence, l'épaisseur du treillis superficiel, mesurée orthogonalement au plan médian, est comprise entre 4 mm et 50 mm.

De préférence, la cellule élémentaire de corps est cubique, de préférence de côté compris entre 5 mm et 50 mm.

De préférence, la cellule élémentaire de corps est circonscrite au polyèdre.

De préférence, le polyèdre étant un dodécaèdre rhombique. De préférence les brins de liaison relient les sommets à angles obtus du dodécaèdre rhombique aux sommets de la cellule élémentaire de corps.

Un « dodécaèdre rhombique » est un polyèdre convexe à douze faces rhombiques. Il comprend donc six sommets à angles aigus, huit sommets à angles obtus et vingt-quatre arêtes.

De préférence, le diamètre des brins de corps et/ou le diamètre des brins de liaison et/ou le diamètre des pieds sont compris entre 0,6 mm et 3 mm, de préférence entre 0,8 mm et 2 mm.

De préférence, les brins de corps et/ou les brins de liaison et/ou les pieds sont en un matériau polymère ou en un métal ou en composite, par exemple en un thermoplastique, de préférence en un thermoplastique élastomère, ou en un polymère chargé de micro-billes de verre.

L'invention concerne également un dispositif choisi parmi :
- un amortisseur de choc,
- un support de soutien corporel, par exemple une assise d'un siège, un coussin, un matelas, un accoudoir, un appui-tête, un rembourrage de casque, ou un repose-poignet, et
- un organe de préhension, par exemple une poignée de préhension, ou un volant directionnel,
le dispositif comportant une structure architecturée en treillis selon l'invention.

L'invention a enfin pour objet un procédé de fabrication d'une structure architecturée en treillis selon l'invention au moyen d'une technique de fabrication additive.

### Brève description des dessins

D'autres avantages et caractéristiques ressortiront mieux à la lecture de la description détaillée, faite à titre illustratif et non limitatif, en référence aux figures suivantes :
[Fig 1A] et [Fig 1B] sont des vues en perspective et de dessus respectivement d'un treillis comportant une pluralité de motifs élémentaires périodiques de type dodécaédrique rhombique ;
[Fig 2A], [Fig 2B] et [Fig 2C] sont des vues en perspective, de dessus et de face respectivement d'un motif élémentaire de type dodécaédrique rhombique ;
[Fig 3] est une vue en perspective d'un exemple de structure architecturée en treillis selon l'invention, les peaux des blocs d'appui des motifs élémentaires superficiels étant disjointes ;
[Fig 4A], [Fig 4B] et [Fig 4C] sont des vues en perspective, de dessous et de face respectivement d'un motif élémentaire superficiel de la structure architecturée en treillis de la figure 3 ;
[Fig 5A] et [Fig 5B] sont des vues en perspective et de dessus respectivement d'un exemple de structure architecturée en treillis selon l'invention, les peaux des blocs d'appui n'étant pas représentées ;
[Fig 6A], [Fig 7A] et [Fig 8A] sont des vues du dessus d'exemples de structures architecturées en treillis selon l'invention, présentant différentes positions des points de fixations des pieds sur les armatures ;
[Fig 6B], [Fig 7B] et [Fig 8B] sont des vues du dessus des structures architecturées en treillis des figures 6A, 7A et 8A, respectivement, dans lesquelles les peaux sont représentées en transparence ;
[Fig 9] est une vue du dessus d'un exemple de structure architecturée en treillis selon l'invention dans laquelle les pieds, dont l'extrémité fixée au bloc d'appui est proximale du bord du treillis superficiel, présentent une longueur inférieure à celle des autres pieds ;
[Fig 10] est une vue de face d'un motif élémentaire superficiel dans lequel le bloc d'appui est constitué uniquement d'une armature ;
[Fig 11] est une vue en perspective d'un exemple de structure architecturée en treillis selon l'invention, les peaux des blocs d'appui des motifs élémentaires superficiels étant solidaires entre elles ;
[Fig 12] est une vue de dessus d'un motif élémentaire superficiel fixé sur un motif élémentaire de corps de la structure architecturée en treillis de la figure 11, la peau étant représentée en transparence ;
[Fig 13A] et [Fig 13B] sont des vues de face de structures architecturées en treillis selon l'invention, présentant chacune une épaisseur du treillis superficiel différente ;
[Fig 14] est une représentation schématique d'une structure architecturée en treillis selon l'invention dont les pieds du treillis superficiel sont complétement déformés ;
[Fig 15] est une vue de face comportant un agrandissement d'une portion d'un exemple de structure architecturée en treillis selon l'invention, le cadre d'appui prenant appui sur les brins de corps et l'armature étant représentée en transparence ;
[Fig 16A], [Fig 16B] et [Fig 16C] sont des vues en perspective, de dessus et de face respectivement d'un exemple de structure architecturée en treillis selon l'invention ;
[Fig 17] est un graphique représentant les évolutions de la contrainte en fonction de la déformation au cours d'un essai de compression de structures architecturées en treillis selon l'invention et d'une structure architecturée en treillis selon l'art antérieur.

### Description détaillée

Par souci de clarté, les mêmes références désignant les mêmes éléments selon l'état de l'art et selon l'invention sont utilisées pour toutes les figures 1A à 10.

Les figures 1A à 2C ont été décrites dans la description de l'état de la technique antérieure.

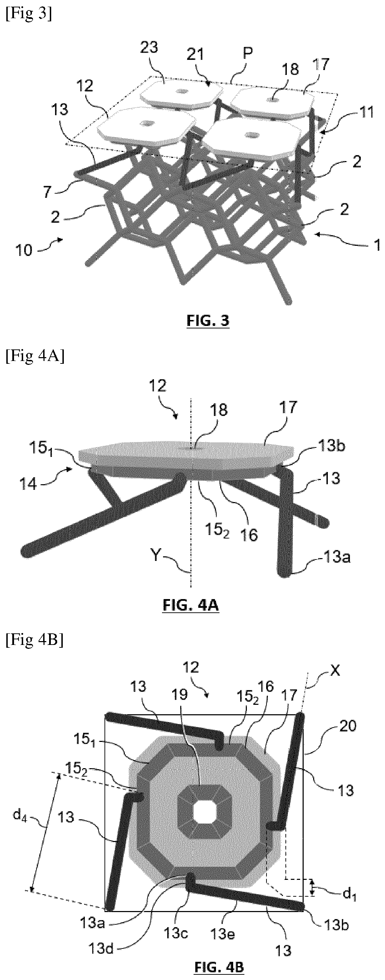

On a illustré à la figure 3 un exemple de structure architecturée en treillis 10 selon l'invention. La structure architecturée en treillis 10 est monolithique et comporte un treillis de corps 1 et un treillis superficiel 11 recouvrant le treillis de corps 1.

Le treillis de corps 1 est similaire au treillis 1 décrit dans le préambule et illustré aux figures 1A et 1B. Le treillis de corps 1 comporte une pluralité de motifs élémentaires de corps 2 répétés périodiquement dans l'espace et en contact les uns avec les autres. Les motifs élémentaires de corps 2 sont de type dodécaédrique rhombique, tels que décrits préalablement et illustrés aux figures 2A, 2B et 2C. Aussi, l'ensemble des caractéristiques déjà décrites concernant le treillis 1 et les motifs élémentaires de type dodécaédrique rhombique 2 des figures 1A à 2C sont applicables au treillis de corps 1 et aux motifs élémentaires de corps 2.

Le treillis superficiel 11 comprend une pluralité de motifs élémentaires superficiels 12 répétés périodiquement dans un plan P et en contact les uns avec les autres. Les motifs élémentaires superficiels 12 sont également en contact et connectés avec le treillis de corps 1.

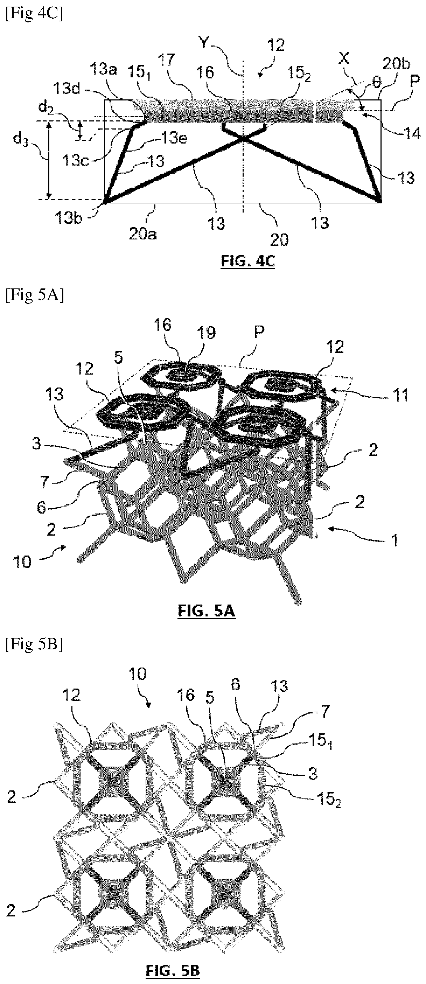

On a illustré aux figures 4A à 4C un motif élémentaire superficiel 12 du treillis superficiel 11 de la figure 3. Un tel motif élémentaire superficiel 12 comprend quatre pieds 13 et un bloc d'appui 14.

Chacun des pieds 13 est constitué d'une unique branche comprenant une extrémité 13a fixée au bloc d'appui 14. L'unique branche du pied 13 comprend également une autre extrémité 13b, opposée à l'extrémité 13a et fixée à un des brins de liaison 7 du treillis de corps 1, comme illustré par les figures 4A et 4B.

Entre l'extrémité 13a et l'autre extrémité 13b, le pied 13 comprend un coude 13c à proximité de l'autre extrémité 13b. Le coude 13c divise ainsi l'unique branche du pied 13 en une première portion rectiligne 13d reliant l'extrémité 13a au coude 13c et une deuxième portion rectiligne 13e reliant l'autre extrémité 13b au coude 13c.

Chaque pied 13 est caractérisé par des distances d₁ et d₂, mesurées parallèlement, respectivement orthogonalement, au plan P, entre l'extrémité 13a et le coude 13c. Ces distances d₁ et d₂ sont choisies de sorte que le pied 13 reste à distance du bloc d'appui 14 et du treillis de corps 1 lors d'une déformation en flexion et/ou d'une torsion de l'extrémité 13a.

Chaque pied 13 s'étend le long d'un axe longitudinal X. L'axe longitudinal X forme un angle θ avec le plan P. Chaque pied 13 est en outre caractérisé par des distances d₃ et d₄, mesurées orthogonalement, respectivement parallèlement, au plan P, entre l'extrémité 13a et l'autre extrémité 13b. L'angle θ, la distance d₃ et la distance d₄ sont chacun choisis en fonction du comportement en déformation désiré sous l'effet d'un effort de compression normal au plan P appliqué au bloc d'appui 14.

L'angle θ et la distance d₄ influencent notamment la rigidité du pied 13. Plus l'angle θ est petit et/ou la distance d₄ est grande, plus le pied 13 est souple, c'est-à-dire fléchit facilement. De préférence, l'angle θ et la distance d₄ sont choisis de sorte que le treillis superficiel 11 présente un module de rigidité élastique inférieur ou égal au module de rigidité élastique du treillis de corps 1.

La distance d₃ influence notamment l'amplitude de la course en translation du bloc d'appui 14 selon un axe parallèle à l'effort de compression. Plus la distance d₃ est grande plus ladite amplitude est grande. La distance d₃ est la même pour chacun des pieds 13 de sorte que le bloc d'appui 14 reste parallèle au plan médian P sous l'effet d'un effort de compression normal au plan médian.

Le bloc d'appui 14 s'étend dans le plan P, appelé plan médian P. Le bloc d'appui 14 comprend un ensemble de poutre d'armature 15₁, 15₂, reliées entre elles en formant une armature 16. Le bloc d'appui 14 comprend également une peau 17 portée et fixée sur l'armature 16.

L'armature 16 est parallèle au plan médian P. Elle est de forme hexagonale convexe et irrégulière. Notamment, les poutres d'armature 15₁ les plus proches des extrémités 13b sont de longueur inférieure aux autres poutres d'armature 15₂. En outre, les extrémités 13a sont fixées auxdites autres poutres d'armature 15₂ de longueur supérieure.

L'armature 16 est centrée autour d'un axe d'armature Y normal au plan médian P. L'armature est invariante par rotation d'angle π/2 autour de l'axe d'armature Y. De même, les pieds 13 sont invariants par rotation d'angle π/2 autour de l'axe d'armature Y.

Comme cela est illustré aux figures 5A et 5B, dans lesquelles la structure architecturée en treillis 10 de la figure 3 est représentée sans la peau 17, l'armature 16 d'un motif élémentaire superficiel 12 présente une forme complémentaire avec le motif élémentaire de corps 2 auquel sont fixés les pieds 13 du motif élémentaire superficiel 12. Vue orthogonalement au plan médian P, l'armature 16 entoure les brins de corps 3 formant le sommet 5 du dodécaèdre rhombique 4 le plus proche de ladite armature 16. De plus, vue orthogonalement au plan médian P, les brins de liaison 7 sont à l'extérieur de l'armature 16. En particulier, vue orthogonalement au plan médian P, les poutres d'armature 15₁ sont superposées aux points de liaison 6 entre les brins de liaison 7 et les brins de corps 3. En partant de l'armature 16 et en suivant une normale au plan médian P, les points du motif élémentaire de corps 2 les plus proches de l'armature 16 sont les points de liaison 6. La distance, mesurée orthogonalement au plan médian P, entre l'armature 16 et le motif élémentaire de corps 2 est ainsi maximisée. Ainsi, lorsque les pieds 13 sont déformés par un effort de compression avec l'extrémité 13a agencé dans la cellule élémentaire de corps 8, l'armature 16 reste distante des brins de corps 3 et des brins de liaison 7.

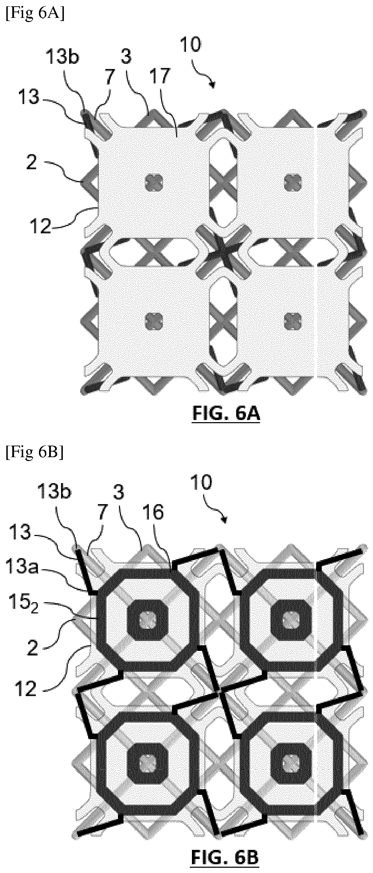

Le point de fixation de l'extrémité 13a sur la poutre d'armature 15₂ peut varier sur l'ensemble de la longueur de la poutre d'armature 15₂. On a illustré aux figures 6A, 6B, 7A, 7B, 8A et 8B des modes de réalisation d'une structure architecturée en treillis 10 présentant différentes positions du point de fixation de l'extrémité 13a sur la poutre d'armature 15₂.

Dans l'exemple illustré par les figures 6A et 6B, l'extrémité 13a de chacun des pieds 13 est fixé au point de la poutre d'armature 15₂ le plus proche de l'extrémité 13b du pied 13 correspondant.

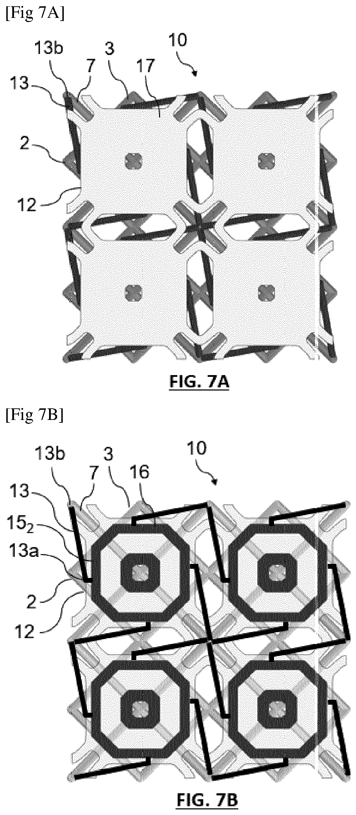

Dans l'exemple illustré par les figures 7A et 7B, l'extrémité 13a de chacun des pieds 13 est fixé à un point de la poutre d'armature 15₂ proche de son milieu.

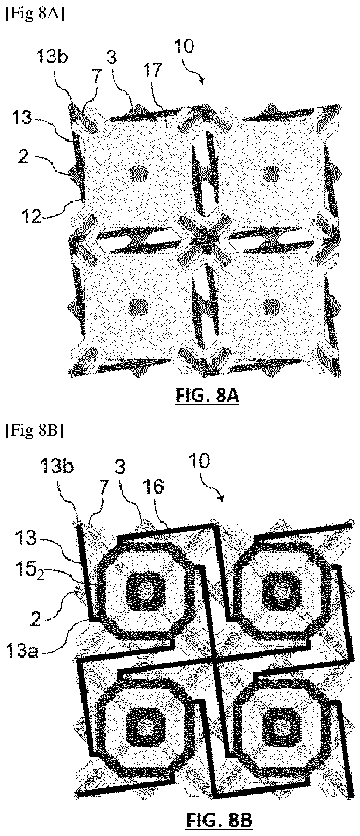

Dans l'exemple illustré par les figures 8A et 8B, l'extrémité 13a de chacun des pieds 13 est fixé au point de la poutre d'armature 15₂ le plus éloigné de l'extrémité 13b du pied 13 correspondant.

En faisant varier la position du point de fixation de l'extrémité 13a sur la poutre d'armature 15₂ le long de la longueur de ladite poutre d'armature 15₂, l'angle θ et la distance d₄ varient. Il est ainsi possible de modifier la rigidité du pied 13 en conservant la même distance d₃. Par exemple, les pieds 13 du mode de réalisation des figures 6A et 6B sont plus rigides que les pieds 13 du mode de réalisation des figures 7A et 7B qui sont plus rigides que les pieds 13 du mode de réalisation des figures 8A et 8B.

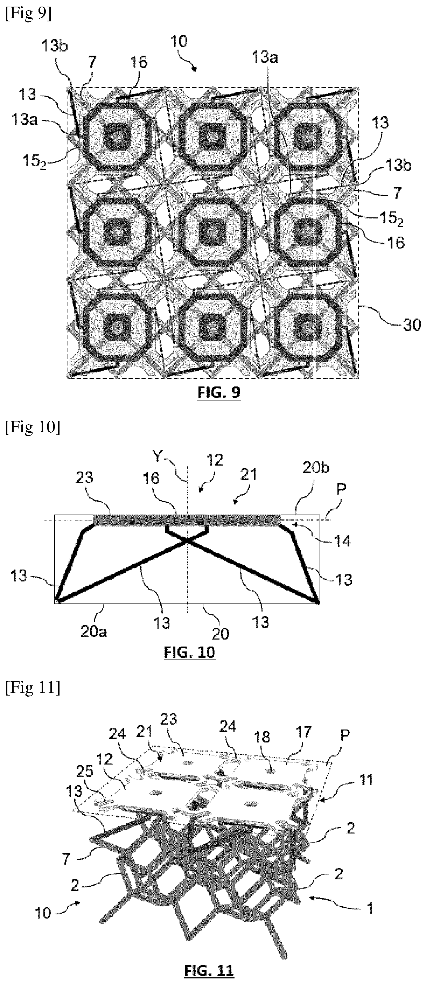

Par ailleurs, pour un même motif élémentaire superficiel 12, au moins un des pieds 13 peut présenter un angle θ et une distance d₃ différents des autres pieds 13. Par exemple, on a illustré à la figure 9 une structure architecturée en treillis 10 selon l'invention dans laquelle les pieds 13, dont l'extrémité 13a fixée au bloc d'appui est proximale du bord 30 du treillis superficiel 11, présentent un angle θ plus grand et une distance d₃ plus grande que les autres pieds 13. En particulier, les extrémités 13a étant proximales du bord 30 du treillis superficiel 11 sont chacune fixées au point de mi-longueur de la poutre d'armature 15₂ correspondante. Les extrémités 13a n'étant pas proximales du bord 30 du treillis superficiel 11 sont chacune fixées au point de la poutre d'armature 15₂ correspondante le plus éloigné de l'extrémité 13b du pied 13 correspondant.

Dans le mode de réalisation illustré à la figure 3, la peau 17 de chacun des motifs élémentaires superficiels 12 est disjointe des peaux 17 des motifs élémentaires superficiels adjacents. La peau 17 présente, vue orthogonalement, un pourtour extérieur ayant une forme d'un hexagone convexe et irrégulier. En particulier, la forme du pourtour extérieur de la peau 17 est un agrandissement du pourtour extérieur de l'armature 16. Ainsi, la peau 17 est conformée pour être distante des brins de liaison 7 lorsque les pieds 13 sont déformés par l'effort de compression et que l'extrémité 13a est comprise dans la cellule élémentaire de corps 8.

La peau 17 comprend une ouverture centrale 18. L'ouverture centrale 18 est en vis-à-vis, c'est-à-dire alignée orthogonalement au plan médian P, avec le sommet 5 du dodécaèdre rhombique 4 le plus proche de la peau 17. L'ouverture centrale 18 a la forme d'un hexagone convexe et irrégulier. En particulier, le pourtour extérieur de l'ouverture centrale 18 est une réduction du pourtour intérieur de l'armature 16.

Le motif élémentaire superficiel 12 du treillis superficiel 11 comprend également un cadre d'appui 19 fixé à la peau 17, comme illustré sur la figure 4B. Le cadre d'appui 19 est agencé entre la peau 17 et le motif élémentaire de corps 2 auquel les pieds 13 sont fixés. Le cadre d'appui 19 s'étend dans le plan médian P autour de l'ouverture centrale 18. La forme du cadre d'appui 19 est un hexagone convexe et irrégulier. En particulier, le cadre d'appui 19 présente un évidement superposé à l'ouverture centrale 18 et de forme par exemple identique à cette ouverture centrale. Ainsi, le cadre d'appui 19 est aligné orthogonalement au plan médian P avec les brins de corps 3 formant le sommet 5 du dodécaèdre rhombique 4 le plus proche de la peau 17. Lors d'une déformation des pieds 13 sous l'effet d'un effort de compression normal au plan médian P, le cadre d'appui 19 vient en contact et prendre appui sur les brins de corps 3 formant le sommet 5 du dodécaèdre rhombique 4 le plus proche de la peau 17. Le cadre d'appui 19 transmet alors une partie de l'effort de compression au treillis de corps 1. Par ailleurs, le cadre d'appui 19 rigidifie la peau 17 au niveau de l'ouverture 18, et, par là-même réduit le risque de déchirement de la peau 17.

Le motif élémentaire superficiel 12 est inscrit dans une cellule élémentaire superficielle 20, qui correspond au plus petit parallélépipède rectangle circonscrit au motif élémentaire superficiel 12. La cellule élémentaire superficielle 20 comprend une face 20a comprenant à chacun de ses sommets une extrémité 13b d'un pied 13. La face 20a est confondue avec une des faces de la cellule élémentaires de corps 8 en partageant les mêmes sommets. Vue orthogonalement au plan médian P, les pieds 13 convergent vers l'intérieur de la cellule élémentaire superficielle 20 de manière spiralée, en partant des extrémités 13b et en allant vers les extrémités 13a.

Les motifs élémentaires superficiels 12 définissent une face extérieure 21 de la structure 10. Cette face extérieure 21 est parallèle au plan P. Le treillis superficiel 11 présente une surface de contact 23 définie comme l'ensemble des points du treillis superficiel 11 compris dans un même plan de la face extérieure 21. La surface de contact 23 est composée de la surface de la peau 17 comprise dans la face 20b de la cellule élémentaire superficielle 20 opposée à la face 20a. Ainsi, la surface de contact 23 du treillis superficiel 11 est plus grande que la surface de contact 9 du treillis de corps 1. De plus, la surface de contact 23 du treillis superficiel 11 est exempte de pointe. Ainsi, la sensation de confort pour un utilisateur s'appuyant sur une structure architecturée en treillis 10 comportant un treillis de corps 1 et le treillis superficiel 11 recouvrant le treillis de corps 1 est améliorée.

On a illustré à la figure 10 un autre exemple dans lequel le bloc d'appui 14 est constitué uniquement de l'armature 16. La surface de contact 23 est la surface de l'armature 16 comprise dans la face 20b de la cellule élémentaire superficielle 20 opposée à la face 20a. La surface de contact 23 du treillis superficiel 11 est plus grande que la surface de contact 9 du treillis de corps 1. De plus, la surface de contact 23 du treillis superficiel 11 est exempte de pointe. Ainsi, la sensation de confort pour un utilisateur s'appuyant sur une structure architecturée en treillis 10 comportant un treillis de corps 1 et le treillis superficiel 11 recouvrant le treillis de corps 1 est améliorée.

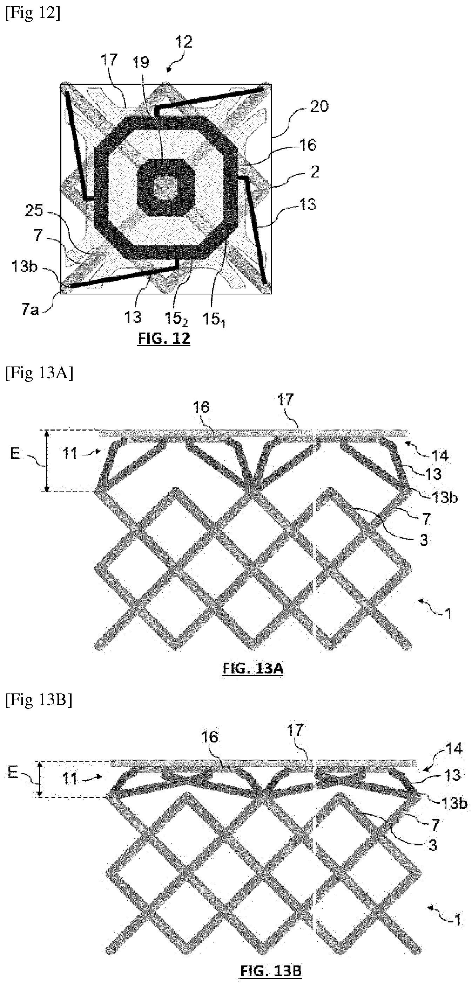

On a illustré à la figure 11 un autre exemple de structure architecturée en treillis 10 selon l'invention. La structure architecturée en treillis 10 de la figure 11 diffère de celle de la figure 3 en ce que les peaux 17 des différents motifs élémentaires superficiels 12 sont jointes solidairement les unes aux autres. La peau 17 de chaque motif élémentaire superficiel 12 comprend des points d'attache 24 fixés solidairement aux points d'attache 24 des peaux 17 adjacentes. Les points d'attache 24 sont situés à proximité des sommets de la face 20b de la cellule élémentaire superficielle 20. Par ailleurs, chaque peau 17 comprend des rainures 25 s'étendant en vis-à-vis d'un des brins de liaison 7, comme illustré à la figure 12. Ainsi, lors d'une translation du bloc d'appui 14 orthogonalement au plan médian P, les brins de liaison 7 s'engagent dans les rainures 25 et n'entrent pas en contact avec la peau 17.

On a illustré aux figures 13A, 13B des structures architecturées en treillis 10 selon l'invention. La structure architecturée en treillis 10 de la figure 13A comprend un treillis superficiel 11 donc l'épaisseur E est supérieure à celle du treillis superficiel 11 de la structure architecturée en treillis 10 de la figure 13B. L'amplitude de course en translation du bloc d'appui 14 du treillis superficiel 11 de la figure 13A est ainsi supérieure à l'amplitude de course en translation du bloc d'appui 14 du treillis superficiel 11 de la figure 13B.

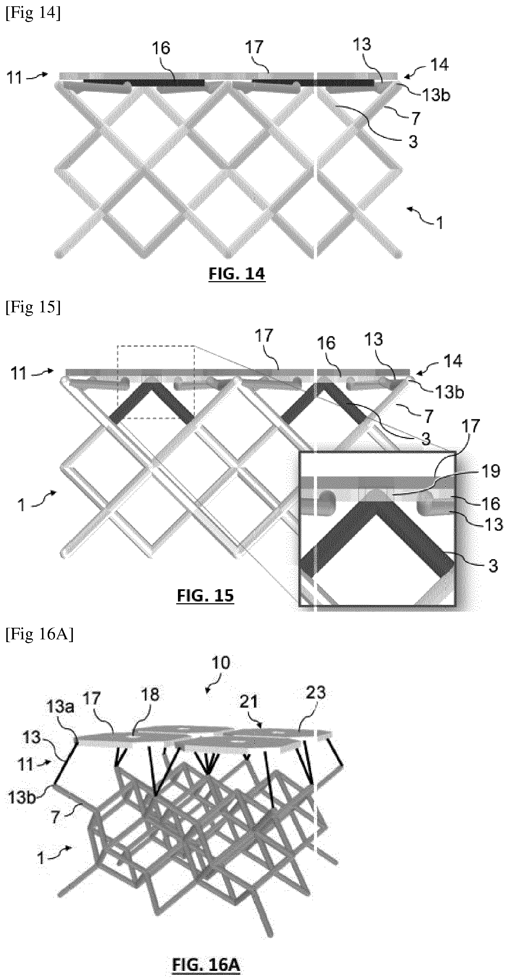

On a illustré à la figure 14, une structure architecturée en treillis 10 selon l'invention déformée sous l'effet d'un effort en compression. Le treillis superficiel 11 subit un effort en compression normal au plan médian P suffisant pour déformer complètement les pieds 13, c'est-à-dire que les pieds 13 ne se déformeront pas davantage sans rompre pour un effort en compression supplémentaire. Le bloc d'appui 14 est alors en contact avec le treillis de corps 1. L'ensemble des efforts au-delà du seuil pour lequel les pieds 13 sont complétement déformés est transmis au treillis de corps 1. La transmission de l'effort de compression du treillis superficiel 11 au treillis de corps 1 se fait par les pieds 13 et par le bloc d'appui 14, notamment le cadre d'appui 19 en contact avec les brins de corps 3, comme illustré à la figure 15.

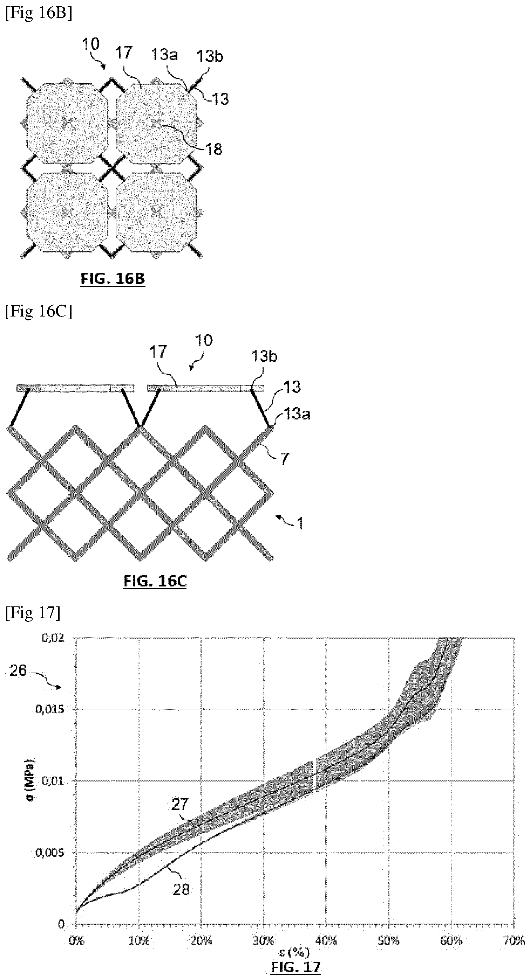

On a illustré aux figures 16A, 16B et 16C une autre structure architecturée en treillis 10 selon l'invention. La structure architecturée en treillis 10 des figures 16A à 16C diffère de celle de la figure 3 en ce que les pieds 13 sont formés d'une unique portion rectiligne et que le bloc d'appui 14 est constitué uniquement de la peau 17. Les pieds 13 ne comprennent donc pas de coude 13c. L'extrémité 13a de chaque pied 13 est fixée directement sur le pourtour extérieur de la peau 17, en particulier au point de la peau 17 le plus proche de l'autre extrémité 13b du pied 13.

Les inventeurs ont réalisé des tests comparatifs en essai de compression de structures architecturées en treillis 10 similaires à celle illustrée à la figure 3 et de structures architecturées en treillis témoins constituées uniquement d'un treillis de corps 1. Les motifs élémentaires de corps 2 des structures architecturées en treillis témoins sont identiques aux motifs élémentaires de corps 2 du treillis de corps 1 de la structure architecturée en treillis 10 illustrée à la figure 3. Pour chacune des structures architecturées en treillis testées, les cellules élémentaires de corps 8 sont des cubes de 15 mm de côté, les brins de corps 3 et les brins de liaison 7 ont un diamètre de 1,0 mm, le treillis de corps 1 est composé de trois strates carrées superposées entre elles et comprenant chacune cinq rangées de cinq motifs élémentaires de corps 2 alignés. Pour chacune des structures architecturées en treillis 10 selon l'invention testées, les pieds 13 ont un diamètre de 1,0 mm.

Les essais en compression ont été réalisés selon une direction normal au plan P dans lequel s'étend le treillis superficiel 11. Pour chacune des structures architecturées en treillis testées, l'essai en compression consiste en l'application d'une précharge de 2 N suivie de quatre compressions à une vitesse de déplacement selon un axe parallèle aux axes d'armature Y de 5 mm/min jusqu'à une déformation de 70 % puis une cinquième compression à une vitesse de 1 mm/min.

On a illustré à la figure 17 les résultats des cinquièmes compressions sous forme de graphique 26 contrainte vs déformation. Le graphique 26 comprend une courbe 27 de la valeur moyenne en contrainte-déformation des essais en compression de trois éprouvettes avec structures architecturées en treillis témoins réalisées par un même procédé d'impression 3D. Le graphique 26 comprend également une courbe 28 de la valeur moyenne en contrainte-déformation des essais en compression de trois exemples de structures architecturées en treillis 10 selon l'invention réalisées par un même procédé d'impression 3D.

Comme observé sur le graphique 26, pour des déformations inférieures à 16 %, la contrainte pour la déformation par compression des structures 10 selon l'invention est inférieure à la contrainte pour la déformation par compression des structures témoins. Cela est mis en évidence par l'écart en contrainte, à une déformation fixée, entre la courbe 27 et la courbe 28. Autrement dit, pour ces faibles déformation les structure 10 selon l'invention sont plus souples que les structures témoins. Au-delà de 16 % de déformation, la présence d'un treillis superficiel ne semble pas influer sur les propriétés mécaniques de la structure architecturée en treillis 10. Ainsi, la présence d'un treillis superficiel 11 sur un treillis de corps 1 de la structure architecturée en treillis 10 selon l'invention procure une amélioration du confort pour l'utilisateur en appui sur ladite structure 10.

D'autres variantes et améliorations peuvent bien évidemment être envisagées sans pour autant sortir du cadre de l'invention tel que défini par les revendications ci-après. En particulier, bien que décrite avec un treillis de corps comportant une pluralité de motifs élémentaires de corps de type dodécaédrique rhombique, l'invention est adaptée pour d'autres types de motif élémentaire de corps.

## Revendications

1. Structure (10) architecturée en treillis comprenant :
- un treillis de corps (1) comportant une pluralité de motifs élémentaires de corps (2) répétés périodiquement et en contact les uns avec les autres, chaque motif élémentaire de corps comportant des brins de corps (3) reliés entre eux pour former les arêtes d'un polyèdre (4) et des brins de liaison (7) reliant le polyèdre aux sommets de la cellule élémentaire de corps (8), qui est le plus petit parallélépipède rectangle circonscrit au motif élémentaire de corps,
- un treillis superficiel (11) définissant une face (21) de la structure et recouvrant au moins partiellement le treillis de corps, le treillis superficiel comportant une pluralité de motifs élémentaires superficiels (12) répétés périodiquement,
chaque motif élémentaire superficiel comportant un bloc d'appui (14) s'étendant dans un plan médian (P), parallèle à la face de la structure définie par le treillis superficiel, et des pieds (13) déformables chacun comportant une extrémité (13a) fixée au bloc d'appui et une autre extrémité (13b) fixée à un des brins de liaison et distante du plan médian,
le treillis superficiel étant configuré pour que sous l'effet d'un effort de compression normal au plan médian, les pieds se déforment pour déplacer le bloc d'appui en translation selon un axe parallèle à l'effort de compression.

2. Structure selon la revendication précédente, les pieds de chaque motif élémentaire superficiel étant disjoints les uns des autres, de préférence chaque pied étant formé d'une unique branche.

3. Structure selon l'une quelconque des revendications précédentes, chaque pied étant coudé à son extrémité fixée au bloc d'appui, de préférence chaque pied comportant deux portions rectilignes (13d, 13e) liées entre elles par un coude (13c), de préférence la distance (d₁), mesurée parallèlement au plan médian, entre l'extrémité fixée au bloc d'appui et le coude est supérieure ou égale à 0,5 mm.

4. Structure selon l'une quelconque des revendications précédentes, chaque motif élémentaire superficiel comportant quatre pieds.

5. Structure selon l'une quelconque des revendications précédentes, chaque pied s'étendant le long d'un axe longitudinal (X) formant un angle (θ) compris entre 10 et 70° avec le plan médian.

6. Structure selon l'une quelconque des revendications précédentes, la distance (d₃), mesurée orthogonalement au plan médian, entre l'extrémité fixée au bloc d'appui et l'extrémité fixée à un des brins de liaison étant comprise entre 3 et 50 mm.

7. Structure selon l'une quelconque des revendications précédentes, la distance (d₄), mesurée parallèlement au plan médian, entre l'extrémité fixée au bloc d'appui et l'extrémité fixée à un des brins de liaison étant comprise entre 0,5 et 45 mm.

8. Structure selon l'une quelconque des revendications précédentes, chaque motif élémentaire superficiel étant inscrit dans une cellule élémentaire superficielle (20) de forme parallélépipèdique rectangle et présentant une face (20a) confondue qui partage les mêmes sommets avec une face d'une des cellules élémentaires de corps.

9. Structure selon l'une quelconque des revendications précédentes, le bloc d'appui comportant une armature (16) comportant une pluralité de poutres d'armature (15₁, 15₂) reliées entre elles pour former les côtés d'un polygone parallèle au plan médian, de préférence l'extrémité de chaque pied fixée au bloc d'appui étant fixée à l'armature, de préférence l'armature étant conformée pour être distante des brins de corps et des brins de liaison lorsque les pieds sont déformés par l'effort de compression et que l'extrémité fixée au bloc d'appui est comprise dans la cellule élémentaire de corps.

10. Structure selon l'une quelconque des revendications précédentes, le bloc d'appui couvrant au moins 50 % de la face du motif élémentaire superficiel vue orthogonalement au plan médian, de préférence le bloc d'appui comportant une peau (17) s'étendant parallèlement au plan médian et couvrant au moins 50 % de la face du motif élémentaire superficiel vue orthogonalement au plan médian, de préférence le bloc d'appui comprenant un cadre d'appui (19) fixé à la peau et configuré pour prendre appui sur les brins de corps lorsque les pieds sont déformés par l'effort de compression.

11. Structure selon l'une quelconque des revendications précédentes, la structure architecturée en treillis étant monolithique, de préférence faite d'un même matériau.

12. Structure selon l'une quelconque des revendications précédentes, l'épaisseur (E) du treillis superficiel, mesurée orthogonalement au plan médian, étant comprise entre 4 mm et 50 mm, et/ou,
le diamètre des brins de corps et/ou le diamètre des brins de liaison et/ou le diamètre des pieds étant compris entre 0,6 mm et 3 mm, de préférence entre 0,8 mm et 2 mm.

13. Structure selon l'une quelconque des revendications précédentes, le polyèdre étant un dodécaèdre rhombique, de préférence les brins de liaison reliant les sommets à angles obtus (6) du dodécaèdre rhombique aux sommets de la cellule élémentaire de corps.

14. Dispositif choisi parmi :
- un amortisseur de choc,
- un support de soutien corporel, par exemple une assise de sièges, un coussin, un matelas, un accoudoir, un appui-tête, un rembourrage de casque, ou un repose-poignet, et
- un organe de préhension, par exemple une poignée de préhension, ou un volant directionnel,
le dispositif comportant une structure architecturée en treillis selon l'une quelconque des revendications précédentes.

15. Procédé de fabrication d'une structure architecturée en treillis selon l'une quelconque des revendications 1 à 13 au moyen d'une technique de fabrication additive.

## Patentansprüche

1. Architekturierte Gitterstruktur (10), aufweisend:
- ein Körpergitter (1), das eine Mehrzahl von elementaren Körpermustern (2) umfasst, die periodisch wiederholt werden und in Kontakt miteinander sind, wobei jedes elementare Körpermuster Körperstränge (3) umfasst, die untereinander verbunden sind, um die Kanten eines Polyeders (4) zu bilden, und Verbindungsstränge (7), die das Polyeder mit den Ecken der elementaren Körperzelle (8) verbinden, die das kleinste rechteckige Parallelepiped ist, das dem elementaren Körpermuster umschrieben ist,
- ein Oberflächengitter (11), das eine Seite (21) der Struktur definiert und das Körpergitter mindestens teilweise bedeckt, wobei das Oberflächengitter eine Mehrzahl von elementaren Oberflächenmustern (12) umfasst, die periodisch wiederholt werden,
wobei jedes elementare Oberflächenmuster einen Stützblock (14) umfasst, der sich in einer Mittelebene (P) parallel zu der Seite der Struktur erstreckt, die durch das Oberflächengitter definiert wird, und verformbare Füße (13), von denen jeder ein Ende (13a), das an dem Stützblock befestigt ist, und ein anderes Ende (13b), das an einem der Verbindungsstränge befestigt ist und von der Mittelebene beabstandet ist, umfasst,
wobei das Oberflächengitter dazu ausgestaltet ist, dass sich die Füße unter der Wirkung einer zu der Mittelebene senkrechten Druckkraft verformen, um den Stützblock translatorisch entlang einer Achse parallel zu der Druckkraft zu verlagern.

2. Struktur nach dem vorhergehenden Anspruch, wobei die Füße jedes elementaren Oberflächenmusters voneinander getrennt sind, wobei vorzugsweise jeder Fuß durch einen einzigen Schenkel gebildet wird.

3. Struktur nach einem der vorhergehenden Ansprüche, wobei jeder Fuß an seinem an dem Stützblock befestigten Ende gebogen ist, wobei vorzugsweise jeder Fuß zwei geradlinige Abschnitte (13d, 13e) umfasst, die untereinander durch einen Bogen (13c) verbunden sind, wobei vorzugsweise der parallel zu der Mittelebene gemessene Abstand (d₁) zwischen dem an dem Stützblock befestigten Ende und dem Bogen größer oder gleich 0,5 mm ist.

4. Struktur nach einem der vorhergehenden Ansprüche, wobei jedes elementare Oberflächenmuster vier Füße umfasst.

5. Struktur nach einem der vorhergehenden Ansprüche, wobei jeder Fuß, der sich entlang einer Längsachse (X) erstreckt, einen Winkel (θ) zwischen 10 und 70° mit der Mittelebene bildet.

6. Struktur nach einem der vorhergehenden Ansprüche, wobei der orthogonal zu der Mittelebene gemessene Abstand (d₃) zwischen dem an dem Stützblock befestigten Ende und dem an einem der Verbindungsstränge befestigten Ende zwischen 3 und 50 mm beträgt.

7. Struktur nach einem der vorhergehenden Ansprüche, wobei der parallel zu der Mittelebene gemessene Abstand (d₄) zwischen dem an dem Stützblock befestigten Ende und dem an einem der Verbindungsstränge befestigten Ende zwischen 0,5 und 45 mm beträgt.

8. Struktur nach einem der vorhergehenden Ansprüche, wobei jedes elementare Oberflächenmuster in eine elementare Oberflächenzelle (20) von rechteckiger parallelepipedischer Form einbeschrieben ist und eine zusammenfallende Seite (20a) aufweist, die dieselben Ecken mit einer Seite einer der elementaren Körperzellen teilt.

9. Struktur nach einem der vorhergehenden Ansprüche, wobei der Stützblock eine Verstärkung (16) umfasst, die mehrere Verstärkungsstreben (15₁, 15₂) umfasst, die untereinander verbunden sind, um die Kanten eines zu der Mittelebene parallelen Polygons zu bilden, wobei vorzugsweise das an dem Stützblock befestigte Ende jedes Fußes an der Verstärkung befestigt ist, wobei die Verstärkung vorzugsweise so ausgebildet ist, dass sie von den Körpersträngen und den Verbindungssträngen beabstandet ist, wenn die Füße durch die Druckkraft verformt werden und das an dem Stützblock befestigte Ende in der elementaren Körperzelle enthalten ist.

10. Struktur nach einem der vorhergehenden Ansprüche, wobei der Stützblock mindestens 50 % der orthogonal zu der Mittelebene betrachteten Seite des elementaren Oberflächenmusters bedeckt, wobei der Stützblock vorzugsweise eine Haut (17) umfasst, die sich parallel zu der Mittelebene erstreckt und mindestens 50 % der orthogonal zu der Mittelebene betrachteten Seite des elementaren Oberflächenmusters bedeckt, wobei der Stützblock vorzugsweise einen an der Haut befestigten Stützrahmen (19) aufweist und dazu ausgestaltet ist, an den Körpersträngen anzuliegen, wenn die Füße durch die Druckkraft verformt werden.

11. Struktur nach einem der vorhergehenden Ansprüche, wobei die architekturierte Gitterstruktur monolithisch ist, vorzugsweise aus demselben Material hergestellt ist.

12. Struktur nach einem der vorhergehenden Ansprüche, wobei die orthogonal zu der Mittelebene gemessene Dicke (E) des Oberflächengitters zwischen 4 mm und 50 mm beträgt, und/oder
wobei der Durchmesser der Körperstränge und/oder der Durchmesser der Verbindungsstränge und/oder der Durchmesser der Füße zwischen 0,6 mm und 3 mm, vorzugsweise zwischen 0,8 mm und 2 mm beträgt.

13. Struktur nach einem der vorhergehenden Ansprüche, wobei das Polyeder ein Rhombendodekaeder ist, wobei die Verbindungsstränge vorzugsweise die stumpfwinkligen Ecken (6) des Rhombendodekaeders mit den Ecken der elementaren Körperzelle verbinden.

14. Vorrichtung, ausgewählt aus:
- einem Stoßdämpfer,
- einer Körperstütze, zum Beispiel einer Sitzfläche von Sitzen, einem Kissen, einer Matratze, einer Armlehne, einer Kopfstütze, einer Helmpolsterung oder einer Handgelenkauflage, und
- einem Greiforgan, zum Beispiel einem Griff oder einem Lenkrad,
wobei die Vorrichtung eine architekturierte Gitterstruktur nach einem der vorhergehenden Ansprüche umfasst.

15. Verfahren zur Herstellung einer architekturierten Gitterstruktur nach einem der Ansprüche 1 bis 13 mittels einer Technik zur generativen Fertigung.

## Claims

1. Architectured lattice structure (10) comprising:
- a body lattice (1) having a plurality of body unit patterns (2) that are repeated periodically and in contact with one another, each body unit pattern having body strands (3) connected to each other to form the edges of a polyhedron (4) and connecting strands (7) connecting the polyhedron to the vertices of the body unit cell (8), which is the smallest rectangular parallelepiped circumscribing the body unit pattern,
- a surface lattice (11) defining a face (21) of the structure and at least partially covering the body lattice, the surface lattice having a plurality of surface unit patterns (12) that are repeated periodically,
each surface unit pattern having a supporting block (14) extending in a median plane (P), parallel to the face of the structure defined by the surface lattice, and deformable feet (13) that each have one end (13a) fastened to the supporting block and another end (13b) fastened to one of the connecting strands and at a distance from the median plane,
the surface lattice being configured so that, under the effect of a compressive force normal to the median plane, the feet deform to move the supporting block in translation along an axis parallel to the compressive force.

2. Structure according to the preceding claim, the feet of each surface unit pattern being separate from one another, each foot preferably being formed of a single branch.

3. Structure according to either one of the preceding claims, each foot being bent at its end fastened to the supporting block, each foot preferably having two rectilinear portions (13d, 13e) connected to each other by a bend (13c), the distance (d₁), measured parallel to the median plane, between the end fastened to the supporting block and the bend preferably being greater than or equal to 0.5 mm.

4. Structure according to any one of the preceding claims, each surface unit pattern having four feet.

5. Structure according to any one of the preceding claims, each foot extending along a longitudinal axis (X) forming an angle (θ) of between 10 and 70° with the median plane.

6. Structure according to any one of the preceding claims, the distance (d₃), measured orthogonally to the median plane, between the end fastened to the supporting block and the end fastened to one of the connecting strands being between 3 and 50 mm.

7. Structure according to any one of the preceding claims, the distance (d₄), measured parallel to the median plane, between the end fastened to the supporting block and the end fastened to one of the connecting strands being between 0.5 and 45 mm.

8. Structure according to any one of the preceding claims, each surface unit pattern being inscribed in a surface unit cell (20) of rectangular parallelepipedal shape and having a coincident face (20a) that shares the same vertices as a face of one of the body unit cells.

9. Structure according to any one of the preceding claims, the supporting block having a reinforcement (16) having a plurality of reinforcement beams (15₁, 15₂) connected to each other to form the sides of a polygon parallel to the median plane, the end of each foot that is fastened to the supporting block preferably being fastened to the reinforcement, the reinforcement preferably being configured to be at a distance from the body strands and the connecting strands when the feet are deformed by the compressive force and that the end fastened to the supporting block is contained in the body unit cell.

10. Structure according to any one of the preceding claims, the supporting block covering at least 50% of the face of the surface unit pattern viewed orthogonally to the median plane, the supporting block preferably having a skin (17) extending parallel to the median plane and covering at least 50% of the face of the surface unit pattern viewed orthogonally to the median plane, the supporting block preferably comprising a supporting frame (19) fastened to the skin and configured to bear on the body strands when the feet are deformed by the compressive force.

11. Structure according to any one of the preceding claims, the architectured lattice structure being monolithic, preferably made from one and the same material.

12. Structure according to any one of the preceding claims, the thickness (E) of the surface lattice, measured orthogonally to the median plane, being between 4 mm and 50 mm, and/or,
the diameter of the body strands and/or the diameter of the connecting strands and/or the diameter of the feet being between 0.6 mm and 3 mm, preferably between 0.8 mm and 2 mm.

13. Structure according to any one of the preceding claims, the polyhedron being a rhombic dodecahedron, the connecting strands preferably connecting the obtuse-angled vertices (6) of the rhombic dodecahedron to the vertices of the body unit cell.

14. Device selected from:
- a shock absorber,
- a body support, for example a seat pan, a cushion, a mattress, an armrest, a headrest, a helmet padding, or a wristrest, and
- a gripping member, for example a gripping handle, or a steering wheel,
the device having an architectured lattice structure according to any one of the preceding claims.

15. Method for manufacturing an architectured lattice structure according to any one of Claims 1 to 13 by means of an additive manufacturing technique.
